(19) Europäisches Patentamt
European Patent Office
Office européen des brevets

(11) **EP 3 335 826 A1**

(12) **EUROPEAN PATENT APPLICATION**

(43) Date of publication:
**20.06.2018 Bulletin 2018/25**

(21) Application number: **16425112.6**

(22) Date of filing: **13.12.2016**

(51) Int Cl.:
**B23K 26/06** (2014.01)   **B23K 26/362** (2014.01)
**B23K 26/38** (2014.01)   **B23K 26/402** (2014.01)
**C03B 33/02** (2006.01)   **B23K 103/00** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Universita' Degli Studi Dell'Insubria
21100 Varese (IT)**

(72) Inventors:
• **JEDRKIEWICZ, Ottavia**
  **21100 Varese (IT)**
• **VALETTI, Davide**
  **21100 Varese (IT)**
• **DI TRAPANI, Paolo**
  **21100 Varese (IT)**

(74) Representative: **Bosman, Cesare et al
Studio Torta S.p.A.
Via Viotti, 9
10121 Torino (IT)**

(54)   **LASER BASED HOLE FORMATION AND ETCHING OF TRANSPARENT MATERIALS**

(57)   Disclosed aspects relate to the generation of through-holes in a glass material and the etching/finishing of pre-existing openings in a glass material with Bessel-like laser beams. In particular, a hole-forming pattern is disclosed that allows the formation of through-holes by providing circular or elliptical trajectories which are specifically separated and on which the displacement of interaction zones is specifically set. Moreover, a method for reshaping a pre-existing through-hole uses an etching pattern to generate a desired shape starting from a pre-existing through-hole within a glass material.

FIG 5

## Description

Technical Field

The present disclosure relates generally to laser processing of transparent materials such as glass, and more particularly to laser cutting using Bessel-like beam configurations.

Background

Laser processing of material, specifically the controlled interaction of laser light with material, is well established in various fields of applications such as laser cutting and laser welding, be it, for example, in industrial as well as medical applications. The interaction depends on the laser light parameters such as wave length, focus zone, laser power etc. as well as the material properties such as absorption at the respective wave length, band gap of the material etc. In combination, those parameters and properties define the interaction that takes place and in particular the field strength that is provided at a specific position within the material.

In "Bessel and annular beams for materials processing" by M. Duocastella, Laser Photonics Rev. 6, No. 5, 607-621 (2012), Bessel beams are disclosed for modifying materials. Furthermore, the use of Bessel beams for laser processing is disclosed, for example, in "High aspect ratio nanochannel machining using single shot femtosecond Bessel beams" by M. K. Bhuyan eta al., Applied Physics Letters 97, 081102-1 (2010) and "Femtosecond non-diffracting Bessel beams and controlled nanoscale ablation" by M. K. Bhuyan et al., IEEE (2011). Furthermore, the use of a pulsed Bessel-like laser beam for laser processing is disclosed, for example, in WO 2014/079570 A1.

Bessel beams in combination with chemical etching were used in methods for rapid laser drilling of holes in glass as disclosed in WO 2015/100056 A1. Furthermore, the generation of birefringent waveguiding microchannels is disclosed in "Fabrication of microchannels in fused silica using femtosecond Bessel beams" by D.A. Yashunin, JOURNAL OF APPLIED PHYSICS 118, 093106 (2015).

Processes of laser trepanning a passage through a workpiece are disclosed in US 5,223,692 B as well as in "Laser Trepanning for Industrial Applications", by D. Ashkenasi, Physics Procedia 12 (2011) 323-331.

The herein disclosed concepts are generally directed at using pulsed Bessel/Bessel-like beams for laser processing a glass sample with the objective of creating micron-sized holes with different shapes. In particular the concepts are directed at generating micron-sized holes in glass from plain bulk by Bessel-like beams and at glass etching with Bessel-like beams for generating in particular square/rectangular apertures in glass.

Thus, the present disclosure is directed, at least in part, to improving or overcoming one or more aspects of prior systems.

Summary of the Disclosure

In a first aspect, the present disclosure is directed to a method for forming a through-hole in a material using a pulsed Bessel-like laser beam. The material is essentially transparent with respect to single photon absorption of the pulsed Bessel-like laser beam when propagating through the material. The method comprises scanning a through-hole forming pattern with the pulsed Bessel-like laser beam, thereby creating a multi-photon process in the regime of optical breakdown photoionization as the underlying process for forming single laser specific pulse damage regions across the material. Thereby, the through-hole forming pattern comprises a path along which the pulsed Bessel-like laser beam is scanned along the surface of material and the path comprises a plurality of concentric circular and/or elliptical trajectories for forming sequences of single laser specific pulse damage regions. For the concentric circular and/or elliptical trajectories, the single laser pulse damage regions of successive laser pulses following immediately one another are displaced with respect to each other by a machining step selected for providing an overlap of single laser pulse damage regions of respective successive laser pulses.

In another aspect, the present disclosure is directed to a method for reshaping a pre-existing through-hole in a material by sidewall-etching with a pulsed Bessel-like laser beam into a desired shape. The material is essentially transparent with respect to single photon absorption of the pulsed Bessel-like laser beam when propagating through the material. The method comprises the steps of providing an etching pattern, which defines a path along which the pulsed Bessel-like laser beam is scanned, wherein the shape of the pattern is associated with the desired shape, and the path comprises a plurality of trajectories for forming sequences of single laser specific pulse etching regions. The single laser pulse etching regions of successive laser pulses following immediately one another along one of the trajectories are displaced with respect to each other by a machining step selected for providing an overlap of single laser pulse etching regions of respective successive laser pulses, and the plurality of trajectories comprise an initial trajectory, a target trajectory defining the desired shape, and a plurality of trajectories extending as a sequence in-between the initial trajectory and the target trajectory; positioning the etching pattern with respect to the pre-existing through-hole such that the initial trajectory extends within the aperture given by the pre-existing through-hole such that the initial trajectory is positioned at an initial distance from the air-material interface defined by the sidewall of the pre-existing through-hole and a non-diffracting zone of the pulsed Bessel-like laser beam extends through the pre-existing through-hole, and scanning the etching pattern with the pulsed Bessel-like laser beam, thereby creating a multi-photon process in the regime of optical breakdown photoionization as the underlying process for ablating material from the sidewall along the non-diffracting zone.

In some embodiments, the method further comprises setting an optical beam path and a laser characteristic of the pulsed Bessel-like laser beam such that the elongate single laser pulse damage regions extend in the material at least through 90 % of a thickness of the material such as completely through the material.

In some embodiments, the method further comprises setting parameters of the optical beam path selected from the group of parameters comprising a conical half-angle of the Bessel-like laser beam and a beam apodization function of the Bessel-like laser beam, wherein, for example, the conical half-angle of the Bessel-like laser beam is settable in the range from 7° to 20°, for example set to 15° in dependence of the material thickness, and/or the beam apodization function is settable via the real apodization FWHM diameter Dapod measured at the entrance of an axicon lens in dependence of the conical half-angle $\theta$, the length of the single laser pulse damage region L, the demagnification 1/M of the optical system without the axicon lens, wherein M is larger 1, the refractive index n of the material, and a selectable parameter k, with 0.5 < k < 2, according to the equation:

$$Dapod = k*2*L/n*tg(\theta)*M.$$

In some embodiments, the method further comprises setting parameters of the laser characteristic of the Bessel-like laser beam selected from the group of parameters comprising a pulse duration, a pulse energy wherein, for example, the pulse duration of a single pulse is settable in the sub-nanosecond range, for example, in the range from 100 ps to 100 fs or from 50 ps to 250 fs or from 15 ps to 10 ps, and the pulse energy is settable in the range from, for example, 1 $\mu$J to 40 $\mu$J per 100 $\mu$m thickness, and/or setting the pulse duration such that the multi-photon process is accompanied by an electron avalanche photoionization.

In some embodiments, the method for forming a through-hole further comprises the steps of: receiving information on a thickness of the material and a desired size of the through-hole; determining a minimum length of a required single laser pulse damage region that is required for creating a damage region to extend completely across the material; determining the beam core associated to the single laser pulse damage region; setting the machining step and the radius increments for the plurality of concentric circular and/or elliptical trajectories of the through-hole forming pattern in line with a desired overlap along and across the concentric circular and/or elliptical trajectories.

In some embodiments, the method for reshaping further comprises the steps of: receiving information on a thickness of the material, determining a minimum length of a required single laser pulse etching region that is required for creating an etching region to extend completely across the material, determining the beam core associated to the single laser pulse etching region, setting the machining step and/or the radius increments for the plurality of trajectories of the etching pattern in line with a desired overlap along and across the trajectories.

Other features and aspects of this disclosure will be apparent from the following description and the accompanying drawings.

Brief Description of the Drawings

The accompanying drawings, which are incorporated herein and constitute a part of the specification, illustrate exemplary embodiments of the disclosure and, together with the description, serve to explain the principles of the disclosure.

In the drawings:

Fig. 1 is a schematic representation of a laser system for processing of materials by employing a Bessel-like laser beam;
Fig. 2 is a diagram illustrating the Bessel-like beam formation in the optical system of the laser system of Fig. 1;
Figs. 3A and 3B are exemplary radial profiles of the fluence at the focus orthogonal to the direction of the laser propagation;
Fig. 4 is an exemplary profile of the fluence in the direction of the laser propagation;
Fig. 5 is an exemplary illustration of a hole formation pattern of single pulse interaction zones along concentric circular trajectories;
Figs. 6A to 9B are taken by means of an optical microscope images of through-holes generated with a hole formation pattern like the one of Fig. 5;
Fig. 10 is an exemplary illustration of an etching pattern of single pulse interaction zones of concentric circular trajectories;
Figs. 11A to 11C are taken by means of an optical microscope images illustrating enlargement of a through-hole using an etching pattern like the one of Fig. 10;
Fig. 12 is an exemplary illustration of an etching pattern of single pulse interaction zones along linear trajectories; and
Figs. 13A to 14 are taken by means of an optical microscope images illustrating etching performed with an etching pattern comprising linear trajectories.

Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The disclosure is based in part on the realization that the high aspect ratio of a Bessel beam focal line can be used to reduce the fabrication time of specific through-holes. In particular, it was realized that micron-sized through-holes can be generated with a writing technique based on a specific distribution of pulsed micro-Bessel beam interaction zones (extending essentially orthogonal to the sample surface).

A particular distribution of pulsed micro-Bessel beam interaction zones comprises interaction zones distributed along concentric circles around a fixed central point. The circles formed by the interaction zones progressively increase in radius after each single pass. In an exemplary parameter constellation for processing a glass plate with Bessel-beam irradiation, the pulse duration used was greater than 12 ps FWHM. It was realized that a well-defined separation of the interaction zones along the concentric circles was needed to ensure the building of the through-hole. In some embodiments, the distance between the interaction zones along the circle was specifically selected such that partially overlapping etching /ablation/damage zones in particular at the sample's surface were present. The concentric circle distribution allowed the generation of holes within glass materials such as glass substrates of 30 $\mu$m, 100 $\mu$m and 150 $\mu$m thick glass substrates, with an aperture size of the order of few tens of micrometers (such as 30 $\mu$m and 50 $\mu$m respectively for the two cases). A minimum achievable size of the through-holes was identified to at least partially depend on the sample thickness and on the aspect ratio of the through-hole.

Moreover, it was realized that by positioning the Bessel beam in the center of an existing through-hole within a glass substrate, e.g. within a e.g. round aperture generated with the above concentric circle distribution, further machining of the glass material was performed using specific etching scan-trajectories. For example, parallel line scanning procedures allowed forming apertures of rectangular shapes.

For the etching mechanism, it was realized that the Bessel beam allows starting to machine a desired surface from an air/glass interface. However, as for the hole generation based in the above described manner, the Bessel beam's interaction zones were set with a well-defined separation along the desired writing lines (etching scan-trajectories).

Regarding the laser processing with Bessel-like beams, Bessel-like beams such as zero-order Bessel beams, may feature an intense central spot which persists in propagation direction essentially without apparent diffraction - in contrast to the focusing of standard Gaussian beam, which is usually strongly diverging after a tight focus. Accordingly, with single laser Bessel-like laser beam pulses, interaction zones over up to a millimeter and more may be achieved that result in a very narrow needle like laser damage zones. The etching /ablation/damage zones may comprise index of refraction modified regions and nano-channels. Positioning the etching /ablation/damage zones close to each other, one may create a material zone which may result in a formation of an unstable material state that then can dissolve to form a through-hole.

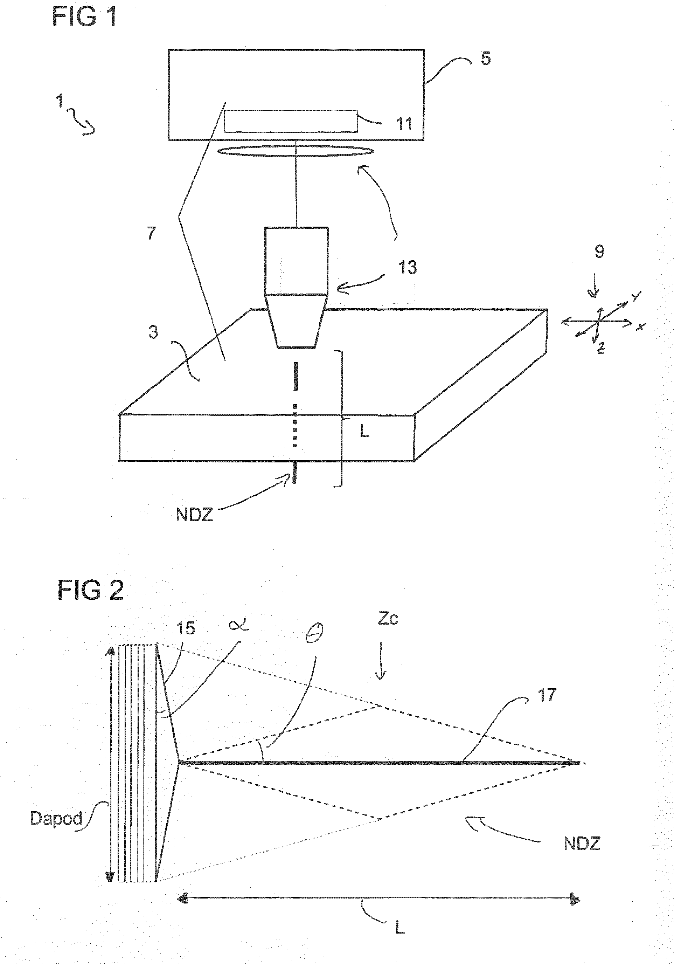

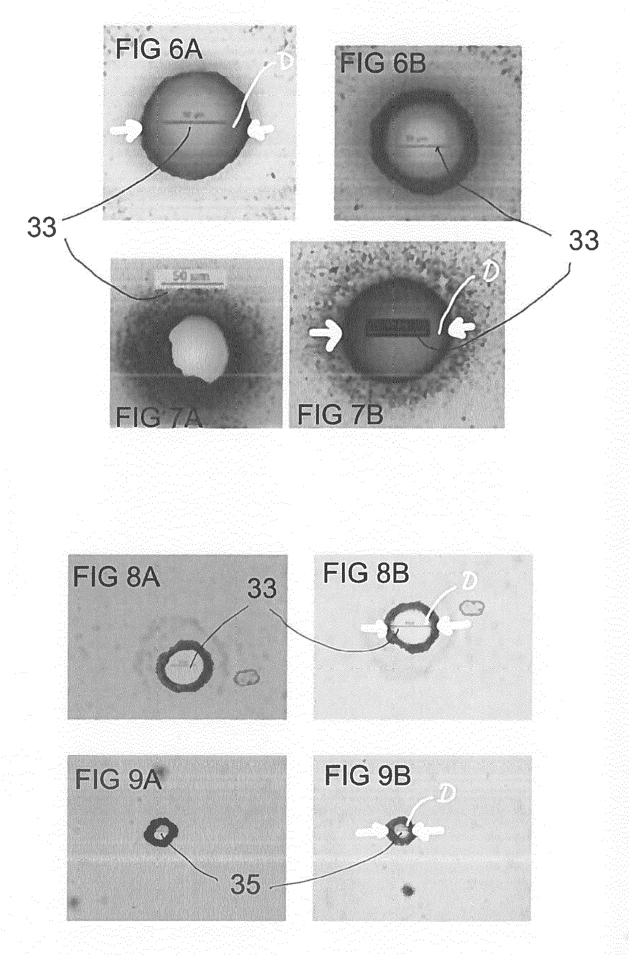

In the following, an exemplary laser system is schematically explained in connection with Figs. 1 to 5 that provide Bessel-like laser pulses. Through-hole forming applications and etching applications are then disclosed in connection with Figs. 6 to Fig. 9B and Fig. 10 to Fig. 14, respectively.

Referring to Fig. 1, an exemplary laser processing system 1 for processing a transparent sample 3 by employing a Bessel-like laser beam comprises a laser system 5, an optical system 7, and a translation unit 9 indicated schematically by arrows. The micromachining set-up can be used for through-hole formation (herein also referred to as "drilling" or "laser based drilling" although removing material is performed based on writing a hole formation pattern based on damage zones into a glass substrate) or etching of specific hole shapes within glass samples by employing e.g. zero-order Bessel beams and starting from a pre-existing aperture.

Laser system 5 is configured to deliver short laser pulses of a specifically adjustable temporal duration. An example of laser system 5 is a Ti:Sapphire laser that generates laser pulses at $\lambda$=800 nm with about 40 fs pulse duration (e.g. transform limited) pulses e.g. at a repetition rate of about 20 Hz. Generally, the pulse duration can be stretched by slightly detuning a respective laser compressor. In general, the pulse duration is selected in accordance with the sample's material and thickness as well as the geometry of the Bessel-like laser beam. For example, the pulse duration can be in the ps-range for sample thicknesses in the range up to several hundred $\mu$m; in particular pulse durations of at least about 12 ps were used in some of the later-on discussed laser processing examples.

Similarly, also the energy per pulse is selected in accordance with the sample's material and thickness as well as the geometry of the Bessel-like laser beam. Examples, of energy per pulse used in the later-on discussed laser processing examples were in the range from 50 $\mu$J to 100 $\mu$J.

Another example for laser system 5 is a Pharos laser providing laser pulses of a minimum pulse duration of 230 fs at a central wavelength of 1030 nm with a pulse repetition rate up to 600 kHz.

Optical system 7 comprises a Bessel-like beam shaping optical system 11 and a demagnifying telescope 13 comprising a lens with e.g. focal length 300 mm and a microscope objective lens of magnification 20 X and a numerical aperture of e.g. 0.4. The optical system is configured for creating a Bessel-like beam based on a Gaussian (input) beam provided by laser system 5 and for focusing the same onto sample 3.

As an example of a Bessel beam, a zero-order Bessel-like beam can be generated by means of a Spatial Light Modulator (SLM) capable of imprinting the phase profile of an axicon (conical lens) onto an input Gaussian laser beam. The resulting beam is then demagnified at the sample position by means of an optical telescopic system constituted by the lens and the microscope objective in Fig. 1.

An exemplary set-up of the optical system is described in more detail in "Experimental investigation of high aspect ratio tubular micro structuring of glass by means of picosecond Bessel vortices" by O. Jedrkiewicz et al., Appl. Phys. A 120, 385 (2015).

Fig. 2 illustrates the generation of a zero-order Bessel beam from a standard input laser beam impinging onto a conical lens (axicon lens 15) being an optical element approach in Bessel beam generation in contrast to the above mentioned SLM. Imprinting the phase profile of an axicon on the beam with an axicon base angle $\alpha$ of 1° generates a Bessel-like beam 17 from a finite energy laser beam that features a non-diffracting zone NDZ depending on the Bessel beam the conical half-angle $\theta$.

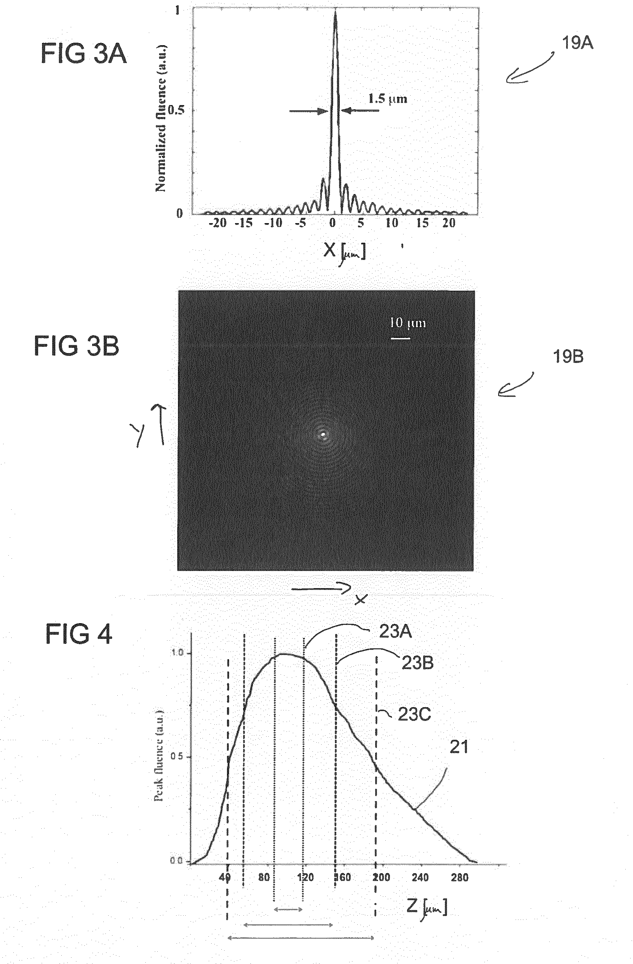

Using such optical systems, Bessel beam features at the micromachining position may have a conical half-angle $\theta$ of about 15° with a core radius of about 1.5 $\mu$m (see Fig. 3A) and a Bessel focal length L (non-diffracting length of non-diffracting zone NDZ) of about 280 $\mu$m.

Non-diffracting zone NDZ extends along Z-direction during laser processing through sample 3 as illustrated in Fig. 1. The herein disclosed aspects in particular relate to laser processing with Bessel beams having a Bessel focal length L of non-diffracting zone NDZ that is at least comparable to the thickness of the processed material, usually having a plate-like shape. The laser processing (e.g. the scanning) is performed in direction of the extension of the plate. Thereby, neighboring elongate single laser pulse damage regions (in the case of hole-forming) or the laser pulse etching regions (in the case of re-shaping of apertures) are displaced with respect to each other by usually a maximum distance of 80 % or less of a beam waist of the Bessel-like laser beam at full width half maximum of its core.

Figs. 3A and 3B illustrate exemplary transverse fluence profiles 19A, 19B within non-diffracting zone NDZ having a peak fluence in dependence of a position in the X-Y-plane. Fig. 3A shows a plot of a normalized fluence along X-direction, while Fig. 3B illustrates a 2D-plot in the X-Y-plane, i.e. orthogonal to Z direction across the beam diameter.

Specifically, transverse fluence profile 19A is taken at a longitudinal central position Zc as shown in Fig. 2 (e. g. close to the center of non-diffracting zone where the peak-fluence longitudinal profile shows its maximum). Transverse fluence profiles 19A, 19B are indicated for the experimentally generated Bessel-like beam with e.g. conical half-angle 15°.

Transverse fluence profiles 19A and 19B show several characteristic concentric fringes across the beam diameter that are set by the respective beam apodisation function of the Bessel-like beam. The full width at half-maximum of a central core of the Bessel-like beam is at the position Zc about 1.5 $\mu$m as indicated in Fig. 3A. In Fig. 3B, a white intensity peak can be seen indicating non-diffracting zone NDZ that is surrounded by concentric intensity peaks (being shown in Fig. 3A in the cross-section).

The beam apodization function may be set via the real apodization FWHM diameter Dapod measured e.g. at the entrance of axicon lens 15 in Fig. 2. It is set in dependence of the conical half-angle $\theta$, the length of the maximum single laser pulse damage region which is similar to length L of non-diffracting zone NDZ, the demagnification 1/M of the optical system 7 without axicon lens 15, wherein M is larger 1, the refractive index n of the material, and, for example, a selectable parameter k, with $0.5 < k < 2$, according to the equation: Dapod = $k*2*L/n*tg(\theta)*M$.

Fig. 4 illustrates an exemplary peak fluence distribution 21 (along the focal line e.g. in Fig. 1 along Z-direction) of the Bessel-like laser beam 17 with a conical half-angle of 15°. A corresponding zone of laser induced damage/ablation/etching should have a length at least equal to the glass sample thickness. Vertical line-pairs 23A, 23B, 23C indicate the top and bottom surfaces of respective samples for three different thicknesses. E.g. line-pair 23A relates to 30 $\mu$m thick (e.g. BK7 or FS) glass, line-pair 23B relates to 100 $\mu$m thick glass, and line-pair 23C relates to a 150 $\mu$m thick glass. The relative position of the respective glass plates across the Bessel focal line can be achieved with translation unit 9. For all samples, it is assumed that, along the sample thickness, the peak fluence provided within Bessel-like beam 17 is above the threshold for etching/ablation/damaging.

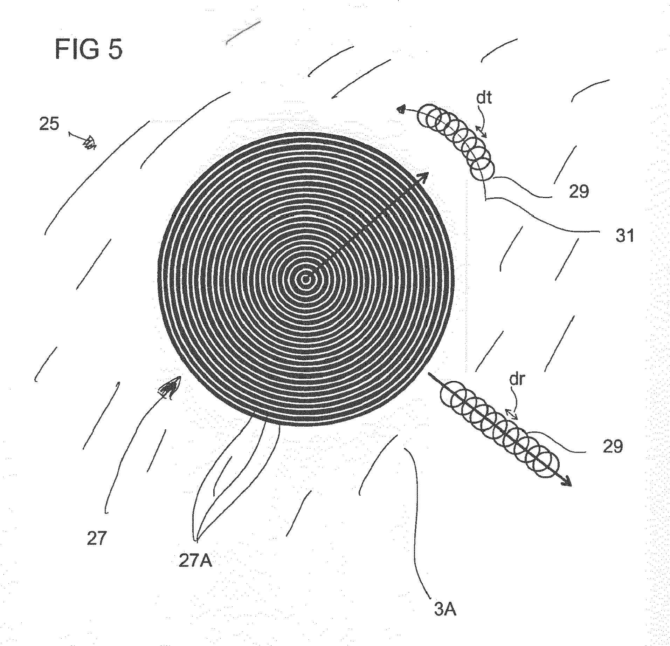

Referring to Fig. 5, the laser processing with laser processing system 1 is illustrated for through-hole drilling using a specific hole formation pattern 25. In general, through-hole forming pattern 25 comprises a path 27 along which pulsed Bessel-like laser beam 17 is scanned along surface 3A of sample 3. Path 27 comprises a plurality of concentric circular and/or elliptical trajectories 27A for forming sequences of single laser specific pulse damage regions. Through-hole forming pattern 25 may comprise further a central position for generating a central single laser specific pulse damage region around which the plurality of concentric circular and/or elliptical trajectories 27A extend.

Fig. 5 is a top view of a front face 3A of sample 3 being machined by irradiating laser pulses of Bessel-like laser beam 17 onto that front face. Sample 3 is scanned - by moving the sample and/or the laser position - along predetermined (scanning) path 27. Specifically, sample 3 is scanned along circular trajectories 27A starting from a center position (not required) with increasing radius after each closed circular trajectory 27A (the increase in radius being indicated by an arrow). For example, the increase in radius may be performed by increments of about 0.5 μm.

Exemplarily, beam cores 29 are indicated for a sequence of circular trajectories at the low right side of Fig. 5. For two concentric circular and/or elliptical trajectories 27A, the single laser pulse damage regions of laser pulses associated with trajectories 27A immediately neighboring one another in a radial direction are displaced with respect to each other by a (radius) increment dr associated with the respective trajectories 27A for providing an overlap of the respective single laser pulse damage regions. As mentioned, for a beam waist at full width half maximum of cores 29 of about 1.5 μm, radius increment dr may be in the range from about 0.3 μm to about 1 μm such as about 0.5 μm. Interestingly, it was found that quite specific parameters are needed to achieve the hole formation. Applying the single laser pulse damage regions to close as well as to far resulted in stable configurations, while only a specific parameter range resulted in the hole-formation.

The laser scanning is performed such that consecutive laser pulses irradiate different areas of front face 3A. For the concentric circular and/or elliptical trajectories 27A, the single laser pulse damage regions of successive laser pulses following immediately one another are displaced with respect to each other by a machining step dt that is specifically selected for providing an overlap of single laser pulse damage regions of respective successive laser pulses. Exemplarily for each circular trajectory 27A, the distribution of respective beam cores 29 of Bessel-like laser beam 17 is indicated schematically by small circles along a circle segment 31 at the top right of Fig. 5, which schematically represent those areas where sample 3 is irradiated by the core of Bessel-like laser beam 17.

Applying the single laser pulse damage regions to close as well as to far resulted in stable configurations, while only a specific parameter range resulted in the hole-formation. For providing an overlap of the respective single laser pulse damage regions, a displacement with respect to each other across/along the trajectories may be limited to a maximum distance of 80 % or less of a beam waist at full width half maximum of a core of the pulsed Bessel-like laser beam as present within a single laser pulse damage region. In general, in some embodiments, a laser-matter interaction zone associated with a beam core for each pulse of the pulsed Bessel-like laser beam overlaps with at least one interaction zones in each direction along the respective concentric circular and/or elliptical trajectory. Similarly, in some embodiments, a laser-matter interaction zone defined by a beam core for each pulse of the pulsed Bessel-like laser beam overlaps with at least one interaction zone in a radial direction across the respective concentric circular and/or elliptical trajectories.

Assuming a sufficient peak fluence, within each beam core 29, a damage zone extends along the propagation axis Z. Exemplary spacing conditions may use a distance such that the damage regions overlap. Accordingly, the distance depends on the respective setting of optical system 7. In the herein discloses examples, a distance (machining step dt along the trajectories) of about 0.5 μm was identified to allow hole-formation as illustrated in Fig. 5.

In some embodiments, the scanning is performed in a single pass scan. Single pass relates to the fact that each section along circular trajectories 27A is only visited (passed) once by the laser beam. In other word, the scanning is performed such that, during the single pass scanning, the pulsed Bessel-like laser beam essentially does not return to an earlier irradiated position. (It will be understood that the partial overlapping between successive pulses may be present for any scanning process but is obviously not considered to be a second pass.)

Using hole formation pattern 25, essentially circular holes can be generated as illustrated in Fig. 6A (top side) and Fig. 6B (bottom side) reproducing images for 100 μm thick BK7 glass with an energy per pulse of about 90 μJ, a pulse duration of about 15 ps, a Bessel beam conical half-angle of about 15°, and a machining step d of about 0.5 μm. The resulting hole diameter D was determined to be about 70 μm.

The images of Fig. 7A (bottom side) and Fig. 7B (top side) illustrate the hole formation in a 100 μm thick fused silica glass performed with the same parameter setting resulting in a smaller hole diameter D of about or less than 50 μm.

The images of Fig. 8A (bottom side) and Fig. 8B (top side) illustrate the hole formation in 30 μm thick BK7 glass performed with the same parameter setting resulting in a smaller hole diameter D of about 50 μm.

In Figs. 6A to 8B, bars 33 indicate a length of 50 μm.

The images of Fig. 9A (bottom side) and Fig. 9B (top side) illustrate the hole formation in 30 μm thick BK7 glass performed with the same parameter setting resulting in a smaller hole diameter D of about 25 μm. In Figs. 9A to 9B, bars 35 indicate a length of 20 μm.

The minimum achievable hole size (i.e. diameter D) is expected to depend on the sample thickness and the beam parameters of Bessel-like laser beam 17.

It should be understood that the above disclosed drilling mechanism is achieved by a combination of phenomena that occur during the laser interaction such as a plasma generation along the focal line of the Bessel beam inducing thermo-mechanical stress mechanisms in the affected area and the resulting pass after pass (along the partially superimposed trajectories) into a progressive in-depth ablation of the substrate.

While the above hole formation pattern 25 was based on concentric circular trajectories 27A, similar creation of openings with different shape may be based on concentric trajectories of arbitrary shape as long as sharp edges/corners in the trajectories are avoided. Accordingly, hole formation patterns such as circular or elliptical patterns can be used.

The drilling processing as disclosed in connection with Fig. 5 to Fig. 9B is based on a limited extension of the damage regions/zone after along predetermined path 27. There initially remains a structural connection between the sections of the material on the sides of circular trajectory 27A. Remaining structural connections may generally also be present in the case that centrally damage regions extend from the front side (through which the laser beam enters the material) to the back side (through which the laser beam exits the material).

With increasing number of circular trajectories 27A, the structural stability of the laser processed circular area being subject to hole formation pattern 25 is lost (e.g. by increasing tension build up) and a through-hole forms which is large with respect to each individual damaging zone. Specficially, the size of the through hole relates to the outer ones of circular trajectories 27A.

The laser processed material may fall out independently from external forces or may be removed by vibrations, a pressure difference, a thermo-mechanical stress mechanisms, because cracks of fused and re-solidified material zones being thinner and more and more fragile after the partially overlapping laser passes.

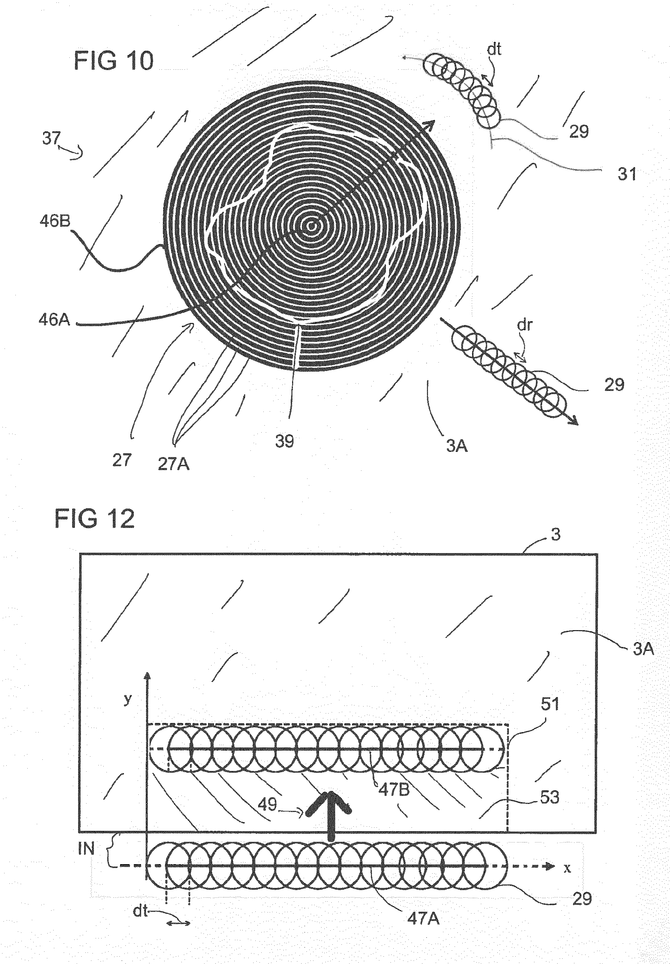

In connection with Figs. 10 to 14, a laser etching process is described that allows treating air-material interfaces, and in particular openings within a material, with Bessel-like laser beam 17. For example, the through-holes as drilled in accordance with the methods discussed above may be treated/etched/reshaped with the hereinafter disclosed methods. However, in general any through-hole or sidewall of an optically transparent material may be subject to the treating/etching/reshaping.

Referring to the drilling process described above, the peak fluence of the treating/etching/reshaping may be similar in value. Nevertheless, while in the foregoing, it was primarily referred to single laser pulse damage regions, in connection with the etching, it is referred to single laser pulse etching regions.

Fig. 10 illustrates an etching pattern 37 that is essentially used for forming circular hole enlargements of pre-existing through-holes. Etching pattern 37 corresponds essentially to drilling pattern 25 and is illustrated similar to Fig. 5 on a top view of a front face 3A of sample 3 in which a through-hole 39 of arbitrary shape is present. As will be understood, through-hole 39 needs to be large enough that at least some circular trajectories 27A can be performed within through-hole 39. Again, sample 3 is scanned - by moving the sample and/or the laser position - along a predetermined path 27 comprising exemplarily circular trajectories 27A starting from a center position (not required). As for the drilling, circular trajectories 27A increase in radius after each circular trajectory 27A has been scanned (the increase in radius being indicated along an arrow by cores 29 being displace by (radius) increment dr). For example, the increase in radius may be performed by increments dr of about 0.5 $\mu$m.

Etching pattern 37 defines path 27 along which the pulsed Bessel-like laser beam 17 is scanned. for the re-shaping, the shape of etching pattern 37 is associated with the desired shape. Path 27 comprises the plurality of trajectories 27A for forming sequences of single laser specific pulse etching regions, wherein the single laser pulse abla etching tion regions of successive laser pulses following immediately one another along one of the trajectories are displaced with respect to each other by machining step dt. Machining step dt is selected for providing an overlap of single laser pulse damage regions of respective successive laser pulses. The plurality of trajectories comprise an initial trajectory 46A (in Fig. 12 discussed below 47A), a target trajectory 46B (in Fig. 12 discussed below 47B) defining the desired shape, and a plurality of trajectories extending as a sequence in-between the initial trajectory 46A and the target trajectory 46B - in Fig. 10, circular trajectories that are concentrically arranged with respect to each other.

As for the hole formation pattern, for each circular trajectory 27A, the distribution of respective beam cores 29 of Bessel-like laser beam 17 is indicated schematically by small circles along a circle segment 31 at the top right of Fig. 10. However, in this case, circle segment 31 does not relate to areas where sample 3 is present but instead is scanned within the aperture of pre-existing hole 39. Accordingly, the core of Bessel-like laser beam 17 can extend essentially undisturbed along the sidewalls of through-hole 39, thereby homogeneously interacting with similar intensity distributions (see Figs. 3A and 3B) with the material of sample 3.

Etching pattern 37 is positioned with respect to the pre-existing through-hole 39 such that the initial trajectory 46A extends within the aperture given by the pre-existing through-hole 39 and initial trajectory 46A is positioned at an initial distance IN from the air-material interface defined by a sidewall of the pre-existing through-hole 39. Respective non-diffracting zone NDZ of pulsed Bessel-like laser beam 17 extends through the pre-existing through-hole 39.

Assuming a sufficient peak fluence within each beam core 29, material is ablated with a homogeneous ablation/etching condition along the propagation axis Z up to a pre-set radial distance from the beam center line. Scanning along etching pattern (37) the pulsed Bessel-like laser beam creates a multi-photon process in the regime of optical breakdown photoionization as the underlying process for ablating material 3 from the sidewall along the non-diffracting zone NDZ, assuming material of sample 3 is within the single laser specific pulse etching region.

Using similar spacing conditions (machining step dt and increments dr) as for the drilling, e.g. using a distance such that the damage regions sufficiently overlap, Bessel-like beam 17 etches the sidewall smoothly.

As will be understood, the implemented distance between neighboring beam cores 29 may depend on the respective setting of optical system 7 and laser system 5, the material of sample 3, and the desired smoothness of an etched surface. In the herein discloses examples, a distance (machining step dt) of about 0.5 $\mu$m was used as schematically illustrated in Fig. 10.

During the etching process, e.g. while moving Bessel-like laser beam along the circular trajectories within through-hole 39, those material areas closest will be ablated first, thus that a through-hole with an essentially circular cross-section is generated.

In some embodiments, the scanning is performed in a single pass scan. Single pass relates again to the fact that each section along circular trajectories 27A is only visited (passed) once by the laser beam. In other word, the scanning is performed such that, during the single pass scanning, the pulsed Bessel-like laser beam does not return to an earlier irradiated position. In some embodiments, each circle may be traced two or more times, if single pass ablation is not sufficient to remove the material.

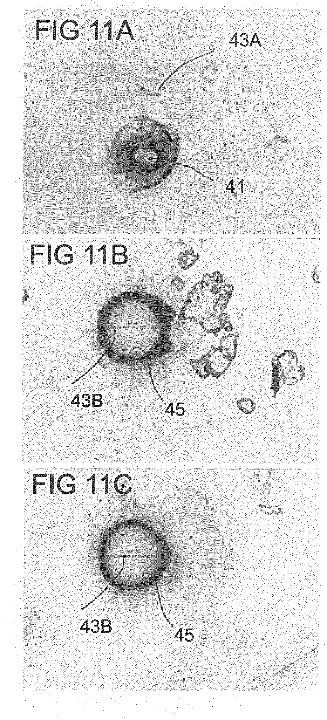

Using etching pattern 37, circular holes can be etched as illustrated in Fig. 11A (pre-existing through-hole, top side), Fig. 11 B (bottom side) and Fig. 11C (top side).

Specifically, Fig. 11A shows a pre-formed hole 41 with significant damage around the aperture having a minimum width of about 25 $\mu$m and a maximum width of about 40 $\mu$m. Bar 43A illustrates 50 $\mu$m.

After having performed etching pattern 37 on a 150 $\mu$m thick BK7 glass with parameters such as an energy per pulse of about 90 $\mu$J, a pulse duration of about 15 ps, a Bessel beam conical half-angle of about 15°, and a machining step d of about 0.5 $\mu$m, the aperture was enlarged to about 100 $\mu$m with a smooth and clean sidewall to form a Bessel-like laser beam etched though-hole 45. Bar 43B illustrates the length of 100 $\mu$m.

In general, any (inner) surface shape of an aperture can be etched by providing the respective scanning trajectory. The etching pattern may comprise, for example, sections of parallel linear trajectories for forming an essentially planar (inner) sidewall of a desired shape and/or sections of curved trajectories that are displaced in direction of the curvature. In addition or alternatively, the etching pattern may comprise a plurality of concentric circular and/or elliptical trajectories for achieving a circular or elliptical formed desired shape. Optionally, the etching pattern may comprise a central position for generating a central single laser specific pulse etching region around which the plurality of concentric circular and/or elliptical trajectories extend.

For two trajectories or sections of trajectories, the single laser pulse etching regions of laser pulses associated with trajectories immediately neighboring one another are displaced with respect to each other by an increment associated with the respective trajectories for providing an overlap of the respective single laser pulse etching regions, such as by being displaced with respect to each other across the trajectories by a maximum distance of 80 % or less of a beam waist at full width half maximum of a core of the pulsed Bessel-like laser beam as present within a single laser pulse damage region, and optionally for a beam waist at full width half maximum of a core of about 1.5 $\mu$m the increment is in the range from about 0.3 $\mu$m to about 1 $\mu$m such as about 0.5 $\mu$m.

A laser-matter interaction zone associated with a beam core for each pulse of the pulsed Bessel-like laser beam overlaps with at least one interaction zones in movement direction along the respective trajectory and/or with at least one interaction zone in a direction across the respective trajectories.

For etching, the material may have a plate-like shape and the scanning may be performed in direction of the extension of the plate such that neighboring non-diffracting zones are displaced with respect to each other by a maximum distance of 80 % or less of a beam waist at full width half maximum of a core of the pulsed Bessel-like laser beam, and optionally for a beam waist at full width half maximum of the core of about 1.5 $\mu$m the machining step is in the range from about 0.3 $\mu$m to about 1 $\mu$m such as about 0.5 $\mu$m.

While Fig. 10 illustrates circular trajectories, Fig. 12 illustrates a linear trajectory 47A which is moved from the air-side into the material of sample 3. The direction is indicated by an arrow 49. Thereby, removing (etching) the material is performed along a straight line. To ensure a proper etching process, linear trajectory 47A is set at a distance IN from the border of sample 3. A scan be seen, the border of sample 3 as well as linear trajectory 47A extend along X-direction in Fig. 12, while arrow 49 extends along Y-direction. By dashed lines 51, the resulting etched region 53 is indicated with respect to the remaining surface 3A of sample 3 assuming a target trajectory 47B.

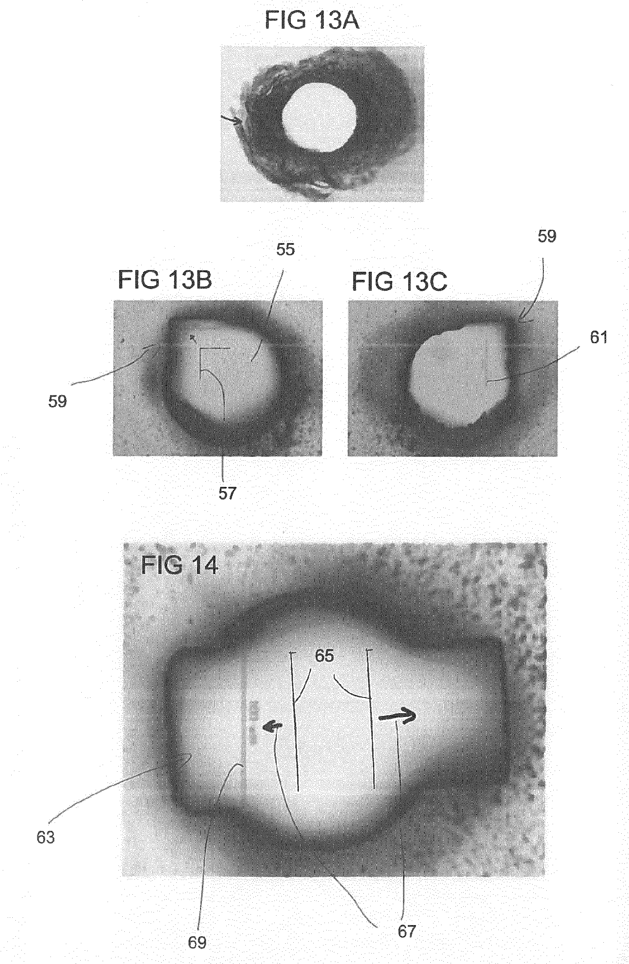

While in Fig. 12, the etching process is schematically indicated for a linearly extending sidewall of sample 3, respective linear trajectories can similarly be applied to curved surfaces as will be shown in the specific formation of through-hole configurations shown in Figs. 13A, 13B, 13C, and 14.

As illustrated in Fig. 13A, the etching starts this time from a preformed hole 55 that was drilled in a 150 $\mu$m thick BK7 glass by focusing multiple shots of a Gaussian beam onto the sample. The damaged region around the hole looks much more condensed than the initial glass material. The respective pulse energy of 66 $\mu$J was not sufficient to ablate the whole depth of the hole smoothly.

For etching, higher energies such as 80 $\mu$J were used to remove material at the interface air-cylindrical wall. Starting from preformed through-hole 55, images of Fig. 13B (top side) and Fig. 13C (bottom side) illustrate how through-hole 55 was given a desired shape. Exemplarily, the material of the sidewalls of through-hole 55 was etched by scanning Bessel-like laser beam 17 along an angled by 90°-trajectory 57. Thereby, a corner structure 59 was formed starting from though-hole 55. Bar 61 illustrates 50 μm.

Fig. 14 illustrates how a key-hole like shaped aperture 63 can be formed starting from a through-hole, which was initially enlarged using a circular scanning pattern of Fig. 10. Then, linear trajectories 65 of a length of about 100 μm were driven at opposite sides of the through-hole into the material in the direction of arrows 67. Bar 69 illustrates 100 μm.

For the respective beam parameters, as a minimum size for a homogeneous lateral surface etching about 30 μm were identified for BK7 glass with a thickness of 150 μm. Moreover, as an optimum machining step of 0.5 μm was identified for the 15° conical half-angle and the BK7 and fused silica glasses examined.

Referring again to Fig. 4, a peak fluence above a threshold value is needed for optical damaging, essentially it is assumed that this threshold value corresponds to the threshold of optical break down. Specifically, a fluence above that threshold value may cause optical break down and thereby modify the internal structure of the material, e.g. form a damage region or even ablation in which material is destroyed. It is assumed that although ablation is one type of laser induced damage other types such as modifications of the index of refraction, changes of the density or even hardness exist and may have the same effect to induce a symmetry for a cleaving process such that high quality cut faces originate that, for example, primarily extend within one plane, e.g. the or next to the plane of the laser induced damage regions.

Herein, a laser induced damage zone may be identified as the zone of the sample over which structures as a result of the laser interaction are observed after cleaving. In general, the length of the laser induced damage zone may be defined as the length of the sample section that shows damage in one plane (if the sample is scanned along X-direction, then in the XZ plane). A laser induced etching zone may be identified as the zone of the sample over which material as a result of the laser interaction is ablated/etched away.

In general, the interaction of a single pulse of, for example, such a Bessel-like beam with a material being essentially transparent with respect to single photon absorption of the laser beam when propagating through the material may be based on multi-photon ionization. Multi-photon ionization may be accompanied by electron avalanche photoionization and result in a single laser pulse damage region. The length of the single laser pulse damage region may be within a range of several 100 μm up to 1 mm and more in direction of the laser beam propagation and the width may be within a range below about 2 μm in radial direction. The extension of the single laser pulse damage region depends on the field strength within the focus of, for example, the core beam and, thus, depends on the optical beam path within optical system 7 and the laser characteristic of the pulsed Bessel-like laser beam such as the laser pulse energy and the laser pulse duration provided by laser system 5.

Transparency with respect to single photon absorption corresponds to the fact that single photon absorption is not the underlying ionization process as, for example, the band gap is larger than the photon energy. Ionization based on multi-photon ionization is generally characterized by an ionization threshold such that also the formation of a damage region is well defined in space. For example, the material may be transparent in the near infrared and/or visible spectral range

When performing the hole formation and etching of the material, the position of the sample with respect to the laser beam may be maintained in such a way that the condensed beam zone (the volume in the space where the fluence (J/cm2) of the laser beam is above ½ of the maximum fluence to e.g. ensure ablation) is positioned across the complete sample thickness.

Although the preferred embodiments of this invention have been described herein, improvements and modifications may be incorporated without departing from the scope of the following claims.

**Claims**

1. A method for forming a through-hole in a material (3) using a pulsed Bessel-like laser beam (17), the material (3) being essentially transparent with respect to single photon absorption of the pulsed Bessel-like laser beam when propagating through the material (3), the method comprising:

   scanning a through-hole forming pattern (25) with the pulsed Bessel-like laser beam (17), thereby creating a multi-photon process in the regime of optical breakdown photoionization as the underlying process for forming single laser specific pulse damage regions across the material (3), wherein
   the through-hole forming pattern (25) comprises a path (27) along which the pulsed Bessel-like laser beam (17) is scanned along the surface (3A) of material (3) and the path (27) comprises a plurality of concentric circular and/or elliptical trajectories (27A) for forming sequences of single laser specific pulse damage regions, wherein, for the concentric circular and/or elliptical trajectories (27A), the single laser pulse damage regions of successive laser pulses following immediately one another are displaced with respect to each other by a machining step (dt) selected for providing an overlap of single laser pulse damage regions of respective successive laser pulses.

2. The method of claim 1, wherein the material (3) has a plate-like shape and the scanning is performed in direction of the extension of the plate such that neighboring elongate single laser pulse damage regions are displaced with respect to each other along the trajectory by a maximum distance of 80 % or less of a beam waist at full width half maximum of a core (29) of the pulsed Bessel-like laser beam (17) as present within a single laser pulse damage region, and optionally for a beam waist at full width half maximum of the core (29) of about 1.5 μm the machining step (d) is in the range from about 0.3 μm to about 1 μm such as about 0.5 μm.

3. The method of claim 1 or claim 2, wherein, for two concentric circular and/or elliptical trajectories (27A), the single laser pulse damage regions of laser pulses associated with trajectories (27A) immediately neighboring one another in a radial direction are displaced with respect to each other by a radius increment associated with the respective trajectories (27A) for providing an overlap of the respective single laser pulse damage regions, such as by being displaced with respect to each other across the trajectories by a maximum distance of 80 % or less of a beam waist at full width half maximum of a core (29) of the pulsed Bessel-like laser beam (17) as present within a single laser pulse damage region, and optionally for a beam waist at full width half maximum of a core (29) of about 1.5 μm the radius increment is in the range from about 0.3 μm to about 1 μm such as about 0.5 μm.

4. The method of any one of the preceding claims, wherein a laser-matter interaction zone associated with a beam core (29) for each pulse of the pulsed Bessel-like laser beam (17) overlaps with at least one interaction zones in each direction along the respective concentric circular and/or elliptical trajectory (27A), and/or wherein a laser-matter interaction zone defined by a beam core (29) for each pulse of the pulsed Bessel-like laser beam (17) overlaps with at least one interaction zone in a radial direction across the respective concentric circular and/or elliptical trajectories (27A).

5. The method of any one of the preceding claims, wherein the scanning along one of the concentric circular and/or elliptical trajectories (27A) is performed in a single pass scan such that a single laser pulse damage region originating from a selected laser pulse has only a single directly neighboring single laser pulse damage region that originates from a single laser pulse irradiated in time immediately before the selected laser pulse and one directly neighboring single laser pulse damage region that originates from a single laser pulse irradiated in time immediately after the selected laser pulse; and/or wherein the through-hole forming pattern (25) comprises further a central position for generating a central single laser specific pulse damage region and around which the plurality of concentric circular and/or elliptical trajectories (27A) extend.

6. The method of any one of the preceding claims, further comprising:

receiving information on a thickness of the material (3) and a desired size of the through-hole; determining a minimum length of a required single laser pulse damage region that is required for creating a damage region to extend completely across the material; determining the beam core (29) associated to the single laser pulse damage region; setting the machining step (dt) and the radius increments (dr) for the plurality of concentric circular and/or elliptical trajectories (27A) of the through-hole forming pattern (25) in line with a desired overlap along and across the concentric circular and/or elliptical trajectories (27A).

7. A method for reshaping a pre-existing through-hole (39) in a material (3) by sidewall-etching with a pulsed Bessel-like laser beam (17) into a desired shape, the material (3) being essentially transparent with respect to single photon absorption of the pulsed Bessel-like laser beam when propagating through the material (3), the method comprising:

providing an etching pattern (37) that defines a path (27) along which the pulsed Bessel-like laser beam (17) is scanned, wherein the shape of the etching pattern (37) is associated with the desired shape, and the path (27) comprises a plurality of trajectories (27A) for forming sequences of single laser specific pulse etching regions, wherein the single laser pulse etching regions of successive laser pulses following immediately one another along one of the trajectories are displaced with respect to each other by a machining step (dt) selected for providing an overlap of single laser pulse damage regions of respective successive laser pulses, and the plurality of trajectories comprise an initial trajectory (46A, 47A), a target trajectory (46B, 47B) defining the desired shape, and a plurality of trajectories extending as a sequence in-between the initial trajectory (46A, 47A) and the target trajectory (46B, 47B); positioning the etching pattern (37) with respect to the pre-existing through-hole (39) such that the initial trajectory (46A, 47A) extends within the aperture given by the pre-existing through-hole (39) such that the initial trajectory (46A, 47A) is positioned at an initial distance (IN) from the air-material interface defined by a sidewall of the pre-existing through-hole (39), and a non-diffracting zone (NDZ) of the pulsed Bessel-like laser beam (17) extends through the pre-existing through-hole (39); and

scanning the pulsed Bessel-like laser beam (17) along the etching pattern (37) with, thereby creating a multi-photon process in the regime of optical breakdown photo ionization as the underlying process for ablating material (3) from the sidewall along the non-diffracting zone (NDZ).

8. The method of claim 7, wherein the etching pattern (37) comprises sections of parallel linear trajectories (47A, 47B) for forming an essentially planar sidewall of a desired shape and/or sections of curved trajectories that are displaced in direction of the curvature; or

wherein the etching pattern (37) comprises a plurality of concentric circular and/or elliptical trajectories (27A) for achieving a circular or elliptical formed desired shape and wherein the etching pattern (37) optionally comprises a central position for generating a central single laser specific pulse etching region around which the plurality of concentric circular and/or elliptical trajectories (27A) extend.

9. The method of claim 7 or claim 8, wherein the material (3) has a plate-like shape and the scanning is performed in direction of the extension of the plate such that neighboring non-diffracting zones (NDZ) are displaced with respect to each other by a maximum distance of 80 % or less of a beam waist at full width half maximum of a core (29) of the pulsed Bessel-like laser beam (17), and optionally for a beam waist at full width half maximum of the core (29) of about 1.5 $\mu$m the machining step (dt) is in the range from about 0.3 $\mu$m to about 1 $\mu$m such as about 0.5 $\mu$m.

10. The method of any one of claims 7 to 9, wherein, for two trajectories (27A) or sections of trajectories, the single laser pulse etching regions of laser pulses associated with trajectories (27A) immediately neighboring one another are displaced with respect to each other by an increment (dr) associated with the respective trajectories (27A) for providing an overlap of the respective single laser pulse etching regions, such as by being displaced with respect to each other across the trajectories by a maximum distance of 80 % or less of a beam waist at full width half maximum of a core (29) of the pulsed Bessel-like laser beam (17) as present within a single laser pulse etching region, and optionally for a beam waist at full width half maximum of a core (29) of about 1.5 $\mu$m the increment is in the range from about 0.3 $\mu$m to about 1 $\mu$m such as about 0.5 $\mu$m; and/or

wherein a laser-matter interaction zone associated with a beam core (29) for each pulse of the pulsed Bessel-like laser beam (17) overlaps with at least one interaction zones in movement direction along the respective trajectory (27A), and/or

wherein a laser-matter interaction zone defined by a beam core (29) for each pulse of the pulsed Bessel-like laser beam (17) overlaps with at least one interaction zone in a direction across the respective trajectories (27A).

11. The method of any one of claims 7 to 10, wherein the scanning along one of the trajectories (27A) is performed in a single pass scan such that a single laser pulse etching region originating from a selected laser pulse has only a single directly neighboring single laser pulse etching region that originates from a single laser pulse irradiated in time immediately before the selected laser pulse and one directly neighboring single laser pulse etching region that originates from a single laser pulse irradiated in time immediately after the selected laser pulse.

12. The method according to any one of the preceding claims, further comprising:

setting an optical beam path and a laser characteristic of the pulsed Bessel-like laser beam (17) such that the elongate single laser pulse damage regions extend in the material (3) at least through 90 % of a thickness of the material (3) such as completely through the material (3).

13. The method according to any one of the preceding claims, further comprising:

setting parameters of the optical beam path selected from the group of parameters comprising a conical half-angle ($\theta$) of the Bessel-like laser beam (17) and a beam apodization function of the Bessel-like laser beam, wherein, for example, the conical half-angle ($\theta$) of the Bessel-like laser beam is settable in the range from 7° to 20°, for example set to 15° in dependence of the material thickness, and/or the beam apodization function is settable via the real apodization FWHM diameter (Dapod) measured at the entrance of an axicon lens (15) in dependence of the conical half-angle ($\theta$), the length of the single laser pulse damage region, the demagnification 1/M of the optical system (7) without the axicon lens (11), wherein M is larger 1, the refractive index n of the material, and a selectable parameter k, with 0.5 < k < 2, according to the equation: Dapod = k*2*L/n*tg($\theta$) *M.

14. The method according to any one of the preceding claims, further comprising:

setting parameters of the laser characteristic of the Bessel-like laser beam (17) selected from the group of parameters comprising a pulse duration ($\tau$), a pulse energy (E) wherein, for example, the pulse duration ($\tau$) of a single pulse is settable in the sub-nanosecond range, for example, in the range from 100 ps to 100 fs or from 50 ps to 250 fs or from 15 ps to 10 ps, and the pulse energy is settable in the range from, for example, 1 $\mu$J to 40 $\mu$J per 100 $\mu$m thickness, and/or

setting the pulse duration ($\tau$) such that the multiphoton process is accompanied by an electron avalanche photoionization.

15. The method of any one of claims 7 to 14, further comprising:

receiving information on a thickness of the material (3);
determining a minimum length of a required single laser pulse etching region that is required for creating an etching region to extend completely across the material;
determining the beam core (29) associated to the single laser pulse etching region;
setting the machining step (dt) and/or the radius increments (dr) for the plurality of trajectories (27A) of the etching pattern (25) in line with a desired overlap along and across the trajectories (27A).

## FIG 1

## FIG 2

FIG 3A

19A

FIG 3B

19B

FIG 4

23A
23B
23C
21

FIG 5

FIG 6A

FIG 6B

33

33

FIG 7A

FIG 7B

FIG 8A

33

FIG 8B

FIG 9A

FIG 9B

35

FIG 10

FIG 12

FIG 11A

43A

41

FIG 11B

43B

45

FIG 11C

43B

45

FIG 13A

FIG 13B

FIG 13C

FIG 14

Europäisches
Patentamt

European
Patent Office

Office européen
des brevets

## EUROPEAN SEARCH REPORT

Application Number

EP 16 42 5112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2015/108991 A2 (IMRA AMERICA INC [US]) 23 July 2015 (2015-07-23) * paragraphs [0004], [0005], [0014], [0081], [0087] - [0089]; figures 2a, 2b * ----- | 1-15 | INV. B23K26/06 B23K26/362 B23K26/38 B23K26/402 C03B33/02 |
| Y,D | WO 2014/079570 A1 (LIGHT IN LIGHT SRL [IT]; UNI DEGLI STUDI DELL INSUBRIA [IT]; UAB ALTEC) 30 May 2014 (2014-05-30) * paragraphs [0014], [0015], [0021], [0028], [0033], [0036], [0047], [0049] * * paragraphs [0067] - [0072], [0081], [0113], [0121], [0126], [0147], [0175], [0180], [0181] * ----- | 1-15 | ADD. B23K103/00 |
| A,D | WO 2015/100056 A1 (CORNING INC [US]) 2 July 2015 (2015-07-02) * paragraphs [0006] - [0009], [0016], [0078], [0080], [0108], [0110] * ----- | 1-15 | |
| A | US 2003/201260 A1 (STEUR HUBERT DE [BE] ET AL) 30 October 2003 (2003-10-30) * paragraphs [0002], [0018], [0020], [0021], [0023] * ----- | 1-15 | TECHNICAL FIELDS SEARCHED (IPC) B23K C03B |

The present search report has been drawn up for all claims

| Place of search | Date of completion of the search | Examiner |
|---|---|---|
| Munich | 30 May 2017 | Schloth, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 335 826 A1

**ANNEX TO THE EUROPEAN SEARCH REPORT
ON EUROPEAN PATENT APPLICATION NO.**

EP 16 42 5112

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2017

| Patent document cited in search report | | Publication date | Patent family member(s) | | Publication date |
|---|---|---|---|---|---|
| WO 2015108991 | A2 | 23-07-2015 | US | 2016318122 A1 | 03-11-2016 |
| | | | WO | 2015108991 A2 | 23-07-2015 |
| WO 2014079570 | A1 | 30-05-2014 | CN | 104968620 A | 07-10-2015 |
| | | | JP | 2016503383 A | 04-02-2016 |
| | | | JP | 2017064795 A | 06-04-2017 |
| | | | KR | 20150087369 A | 29-07-2015 |
| | | | KR | 20170042793 A | 19-04-2017 |
| | | | US | 2015299018 A1 | 22-10-2015 |
| | | | WO | 2014079478 A1 | 30-05-2014 |
| | | | WO | 2014079570 A1 | 30-05-2014 |
| WO 2015100056 | A1 | 02-07-2015 | CN | 106029286 A | 12-10-2016 |
| | | | EP | 3083125 A1 | 26-10-2016 |
| | | | JP | 2017510531 A | 13-04-2017 |
| | | | KR | 20160101085 A | 24-08-2016 |
| | | | TW | 201536462 A | 01-10-2015 |
| | | | US | 2015166395 A1 | 18-06-2015 |
| | | | US | 2015166396 A1 | 18-06-2015 |
| | | | US | 2016368100 A1 | 22-12-2016 |
| | | | WO | 2015100056 A1 | 02-07-2015 |
| US 2003201260 | A1 | 30-10-2003 | CN | 1636426 A | 06-07-2005 |
| | | | DE | 10207288 A1 | 11-09-2003 |
| | | | JP | 4250533 B2 | 08-04-2009 |
| | | | JP | 2005518679 A | 23-06-2005 |
| | | | KR | 20040083537 A | 02-10-2004 |
| | | | US | 2003201260 A1 | 30-10-2003 |
| | | | WO | 03073810 A1 | 04-09-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014079570 A1
- WO 2015100056 A1

- US 5223692 B


**Non-patent literature cited in the description**

- **M. DUOCASTELLA.** Bessel and annular beams for materials processing. *Laser Photonics Rev.,* 2012, vol. 6 (5), 607-621
- **M. K. BHUYAN.** High aspect ratio nanochannel machining using single shot femtosecond Bessel beams. *Applied Physics Letters,* 2010, vol. 97, 081102-1
- **M. K. BHUYAN et al.** Femtosecond non-diffracting Bessel beams and controlled nanoscale ablation. *IEEE,* 2011

- **D.A. YASHUNIN.** Fabrication of microchannels in fused silica using femtosecond Bessel beams. *JOURNAL OF APPLIED PHYSICS,* 2015, vol. 118, 093106
- **D. ASHKENASI.** Laser Trepanning for Industrial Applications. *Physics Procedia,* 2011, vol. 12, 323-331